(19) Europäisches Patentamt
European Patent Office
Office européen des brevets

(11) **EP 1 348 895 B1**

(12) **EUROPEAN PATENT SPECIFICATION**

(45) Date of publication and mention
of the grant of the patent:
**23.07.2008 Bulletin 2008/30**

(51) Int Cl.:
***F16H 61/20*** *(2006.01)*

(21) Application number: **03007018.9**

(22) Date of filing: **27.03.2003**

(54) **Hydraulic system for automatic transmission for vehicle having idle-stop control**

Hydraulisches Steuerungssystem für ein automatisches Getriebe mit Leerlaufstoppregelung

Système de commande hydraulique pour transmission automatique pour véhicule avec commande d'arrêt en position de ralenti

(84) Designated Contracting States:
**DE FR GB**

(30) Priority: **29.03.2002 JP 2002096397**

(43) Date of publication of application:
**01.10.2003 Bulletin 2003/40**

(73) Proprietor: **JATCO Ltd**
**Fuji-shi,**
**Shizuoka 417-8585 (JP)**

(72) Inventor: **Katou, Yoshiaki,**
**Jatco Ltd.**
**Fuji-shi,**
**Shizuoka 417-8585 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 742 395     EP-A- 0 922 600**
**EP-A- 1 070 868     EP-A- 1 177 932**
**FR-A- 2 801 343     US-A- 5 795 262**
**US-B1- 6 258 008**

## Description

The present invention relates to an automatic transmission for a vehicle having idle-stop control means according to the preamble of independent claim 1 and to a method for controlling an automatic transmission for a vehicle having idle-stop control means according to the preamble of independent claim 4.
Such an automatic transmission for a vehicle having idle-stop control means and such a method for controlling an automatic transmission for a vehicle having idle-stop control means can be taken from the Prior art document EP 1 177 932 A2.

In recent years, idle-stop vehicles are already operational wherein when the running vehicle comes into a standstill, and predetermined stop conditions are formed, an engine is automatically stopped to achieve fuel savings, a reduction in exhaust emission or noises and the like. With such vehicle, when the engine is stopped, a main pump driven by the engine is stopped, so that oil supplied to a forward clutch or engagement element of an automatic transmission is drawn from a hydraulic passage, lowering the hydraulic pressure. As a result, when the engine is restarted, the forward clutch to be engaged at forward running releases from its engagement state. Thus, if the forward clutch is not engaged quickly at engine restart, an accelerator pedal is depressed in the neutral state as it were, which may produce an engagement shock by engagement of the forward clutch with engine rotation highly increased.

The technique for solving the above inconvenience is proposed in U.S. Patent No. 6,093,974. This technique adopts a system for starting an oil supply for engaging a forward clutch concurrently with engine restart. In order to obtain engagement of the forward clutch as fast as possible, quick pressure increase control for oil is temporarily carried out during a predetermined time when supplying oil. The reference discloses as quick pressure increase control a technique for reducing a time required for oil supply through a hydraulic passage with higher passage resistance and a technique for setting a target control pressure of a solenoid for adjusting the line pressure to a value higher than an ordinary value.

However, the above earlier art raises the following problem. When the engagement element includes a multiple disk clutch, for example, its facing will be thinned due to degradation with time. Such reduction in thickness of the facing leads to an increase in pre-charge time corresponding to a piston stroke. Thus, even if quick pressure increase control is carried out during a predetermined time, torque input from the engine is increased without sufficient engagement pressure being secured, raising a problem of having highly increased engine rotation. Moreover, even without having highly increased engine rotation, the forward clutch is engaged with torque input from the engine being greater, raising a problem of producing a start shock.
Prior art document EP 1 177 932 A2 teaches an automatic start controlling apparatus for automatically starting an internal combustion engine. A transmission is coupled to the engine. The transmission has a clutch, which is actuated by an oil pump other than the engine when the engine stops. The transmission has an input shaft and an output shaft. The input shaft is connected to the engine. The automatic start controlling apparatus has a controller. When the engine is automatically started, the controller detects whether the clutch is completely engaged. When the controller judges that the clutch is partially engaged, the controller reduces the output torque of the engine or limits an increase of the output torque.

It is, an object of the present invention to provide an automatic transmission for a vehicle having idle-stop control means as indicated above and a method for controlling an automatic transmission for a vehicle having idle-stop control means indicated above, which allows smooth running of the vehicle during execution of idle-stop control.
According to the present invention, said object is solved by an automatic transmission for a vehicle having idle-stop control means having the features of independent claim 1. Preferred embodiments are laid down in the dependent claims. Furthermore, said object is also solved by a method for controlling an automatic transmission for a vehicle having idle-stop control means having the features of independent claim 4. Preferred embodiments are laid down in the dependent claims.
Hereinafter, the present invention is illustrated and explained by means of preferred embodiments in conjunction with the accompanying drawings. In the drawings wherein:

FIG. 1 is a block diagram showing a control system for a vehicle provided with a hydraulic system for an automatic transmission embodying the present teaching;

FIG. 2 is a schematic drawing illustrating a multiple-speed transmission or a speed change mechanism;

FIG. 3 is a table showing engagement of engagement elements in the multiple-speed transmission;

FIG. 4 is a diagram illustrating a hydraulic circuit in a first embodiment;

FIG. 5 is a flowchart illustrating operation of the first embodiment;

FIG. 6 is a chart similar to FIG. 5, illustrating operation of the first embodiment;

FIG. 7 is a time chart illustrating operation of the first embodiment;

FIG. 8 is a diagram similar to FIG. 4, showing oil flow immediately after engine restart in the first embodiment;

FIG. 9 is a diagram similar to FIG. 8, showing oil flow after supplying the pilot pressure in the first embodiment;

FIG. 10 is a chart similar to FIG. 6, illustrating a second embodiment of the present teaching;

FIG. 11 is a chart similar to FIG. 7, illustrating operation of the second embodiment;

FIG. 12 is a chart similar to FIG. 10, illustrating a third embodiment of the present teaching;

FIG. 13 is a diagram similar to FIG. 9, showing a fourth embodiment of the present teaching;

FIG. 14 is a chart similar to FIG. 12, illustrating operation of the fourth embodiment;

FIG. 15 is a chart similar to FIG. 11, illustrating operation of the fourth embodiment;

FIG. 16 is a chart similar to FIG. 14, illustrating a fifth embodiment of the present teaching; and

FIG. 17 is a chart similar to FIG. 16, illustrating operation of the fifth embodiment.

Referring to the drawings, a description is made with regard to a hydraulic system for an automatic transmission for a vehicle having idle-stop control embodying the present teaching.

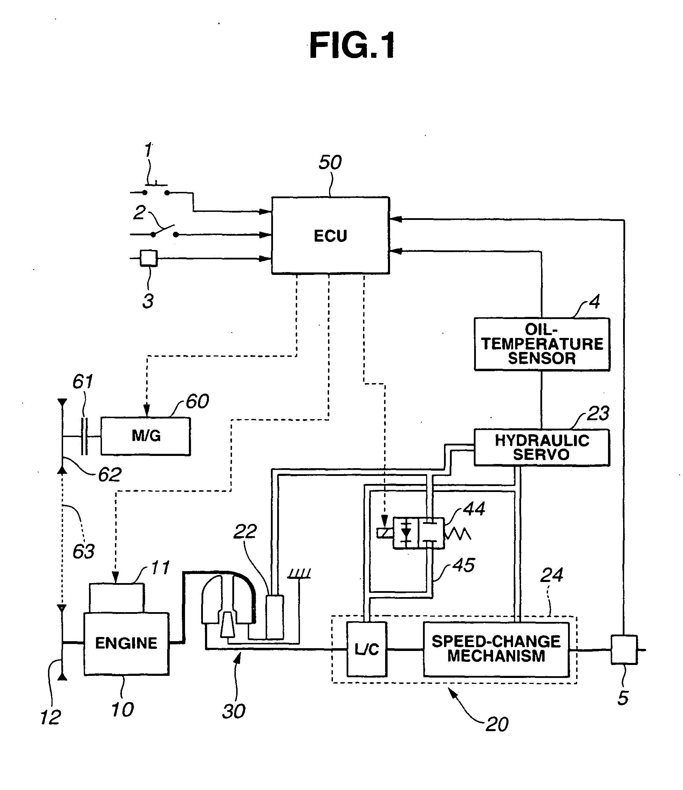

Referring to FIG. 1, a vehicle comprises an engine 10, an automatic transmission 20, a torque converter 30, an electronic control unit (ECU) 50, and a starter generator 60.

The engine 10 is provided with a fuel supply system 11 for supplying fuel to the engine 10, and a chain sprocket 12 connected by a chain 63 to a chain sprocket 62 which is provided to the starter generator 60 through an electromagnetic clutch 61. When serving as a starter of the engine 10, a generator in deceleration, and a generator for generating power in accordance with the battery storage state, the starter generator 60 is put in engagement with the engine 10 by the electromagnetic clutch 61.

The automatic transmission 20 is provided with an oil pump 22 which is rotated with the engine 10 for supplying the hydraulic pressure to a hydraulic servo 23, and is branched to directly communicate with a piston chamber of a forward clutch or low clutch L/C through a passage switching solenoid valve 44.

The ECU 50 inputs signals from an idle-stop switch 1, a brake switch 2, a steering-angle sensor 3, an oil-temperature sensor 4, and a vehicle-speed sensor 5 so as to control operation of the starter generator 60, the solenoid valve 44, and the fuel supply system 11.

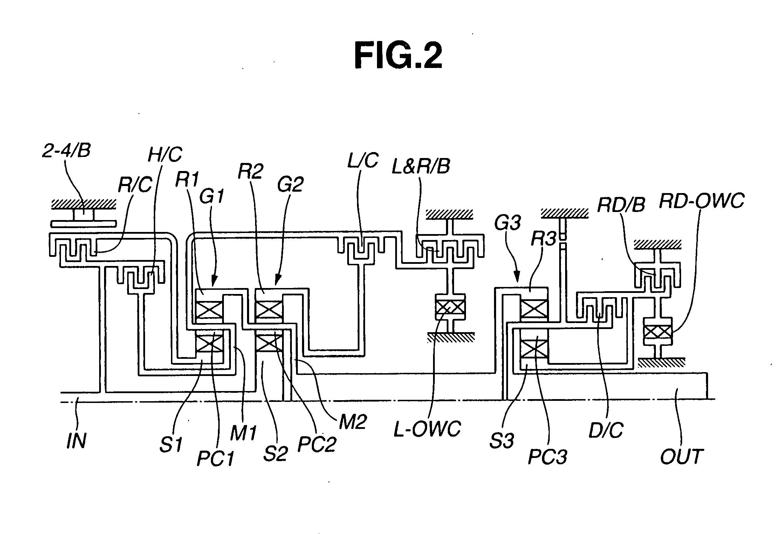

In the first embodiment, a speed change mechanism 24 comprises a gear-type multiple-speed transmission. Referring to FIG. 2, the multiple-speed transmission includes planetary gears G1, G2, G3, coupling members M1, M2, clutches R/C, H/C, L/C, D/C, brakes L&R/B, 2-4/B, RD/B, one-way clutches L-OWC, RD-OWC, an input shaft or member IN, and an output shaft or member OUT.

The first planetary gear G1 is a single pinion type planetary gear comprising a first sun gear S1, a first ring gear R1, and a first carrier PC1 for supporting a pinion meshed with the gears S1, R1. The second planetary gear G2 is a single pinion type planetary gear comprising a second sun gear S2, a second ring gear R2, and a second carrier PC2 for supporting a pinion meshed with the gears S2, R2. The third planetary gear G3 is a single pinion type planetary gear comprising a third sun gear S3, a third ring gear R3, and a third carrier PC3 for supporting a pinion meshed with the gears S3, R3.

The first coupling member M1 is a member for integrally coupling the first carrier PC1 to the second ring gear R2 through a low clutch L/C. The second coupling member M2 is a member for integrally coupling the first ring gear R1 to the second carrier PC2.

The reverse clutch R/C is engaged at the reverse (R) range to connect the input shaft IN and the first sun gear S1. The high clutch H/C is engaged at the third and fourth speeds to connect the input shaft IN and the first carrier PC1. The low clutch L/C is engaged at the first, second, and third speeds to connect the first carrier PC1 and the second ring gear R2. The direct clutch D/C is engaged at the fifth speed to connect the third carried PC3 and the third sun gear S3.

The low and reverse brake L&R/B is engaged at the first speed and the R range to fix rotation of the first carrier PC1. The 2-4 brake 2-4/B is engaged at the second, fourth, and fifth speeds to fix rotation of the first sun gear S1. The reduction brake RD/B is engaged at the first, second, third, and fourth speeds to fix rotation of the third sun gear S3. The low one-way clutch L-OWC is actuated when the vehicle is in acceleration at the first speed to fix rotation of the first carrier PC1, and it is not actuated during deceleration. The reduction one-way clutch RD-OWC is actuated when the vehicle is in acceleration at the first, second, third, and fourth speeds to fix rotation of the third sun gear S3, and it is not actuated during deceleration.

The input shaft IN is coupled to the first ring gear R1 so as to input engine torque through the torque converter 30. The output shaft OUT is coupled to the third carrier PC3 so as to transfer its output torque to driving wheels through a final gear and the like, not shown. Connected to the clutches and the brakes is the hydraulic servo 23 for creating the engagement pressure and the release pressure at each gear ratio.

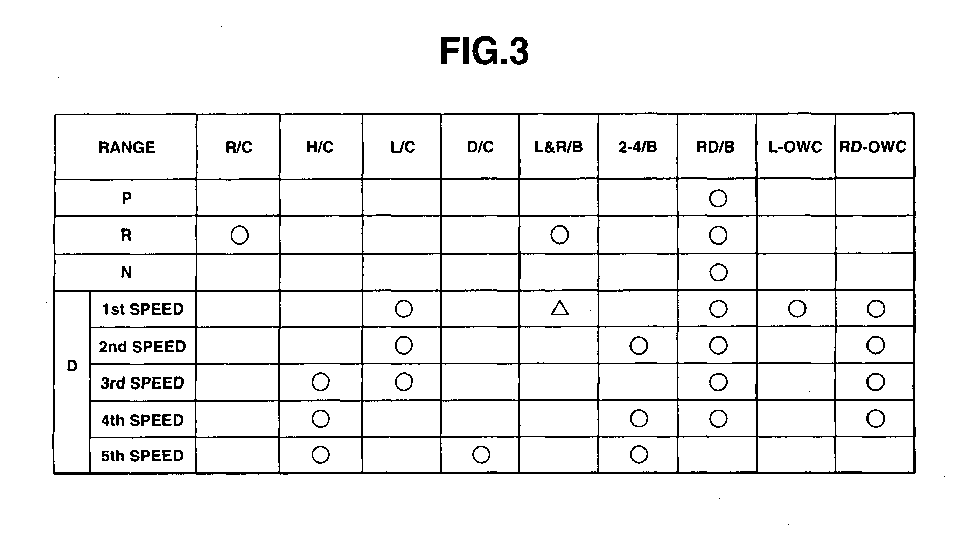

Next, speed change operation is described. FIG. 3 shows a table of engagement operation in the speed change mechanism 24 in the first embodiment. In FIG. 3, a sign ○ denotes the engagement state, and a sign Δ denotes the state involved in torque transfer at power-on. Note that the drive mode includes both a mode selected by shifting a unillustrated select lever at the drive (D) range position, and an automatic-shift mode selected when the automatic transmission has automatic-shift mode and manual-shift mode.

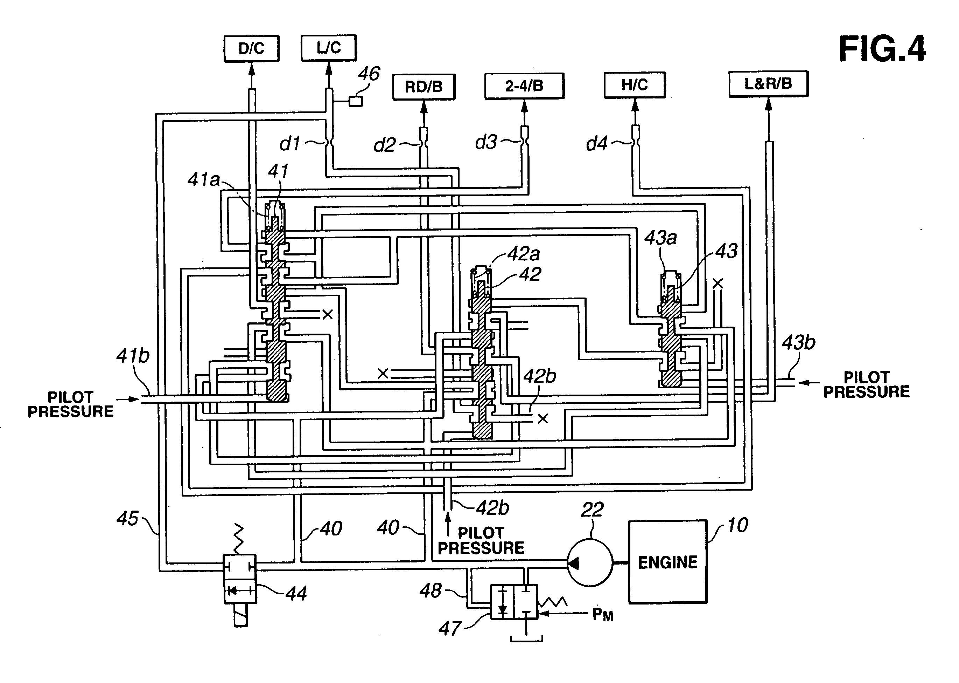

Referring to FIG. 4, there is shown a hydraulic circuit for supplying the control pressure from the hydraulic servo 23 to the speed change mechanism 24 in the first embodiment. The hydraulic circuit comprises oil pump 22 driven by the engine 10, a pressure regulating valve 47 for regulating the discharge pressure of the pump 22 for the line pressure, a line-pressure circuit 40 for supplying the line pressure, first, second and third shift valves 41, 42, 43 for switching the hydraulic circuits, and pilot-pressure circuits 41 b, 42b, 43b for supplying the pilot pressure to the shift valves 41, 42, 43. The line-pressure circuit 40 is provided with a bypass passage 45 which communicates with the low clutch L/C immediately upstream thereof. The passage switching solenoid valve 44 is arranged on the bypass passage 45 to be switched between the communicating state and the non-communicating state. A low-clutch pressure sensor 46 is arranged between the low clutch L/C and the bypass passage 45 to sense the engagement pressure of the low clutch L/C.

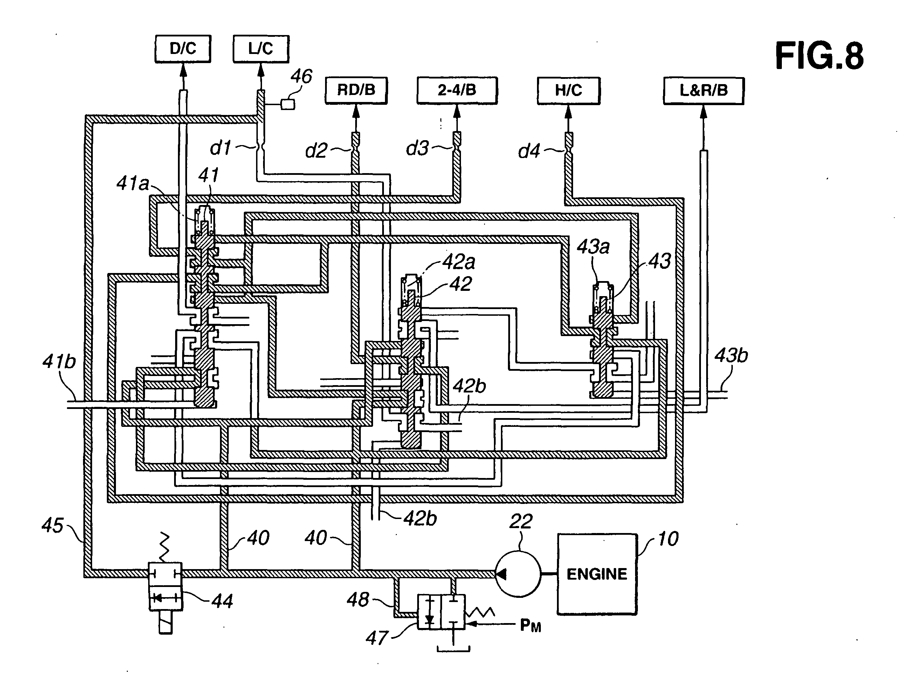

Orifices d1, d2, d3, d4 are arranged immediately upstream of the low clutch L/C, the reduction brake RD/B, the 2-4 brake 2-4/B, and the high clutch H/C, respectively, to prevent the serge pressure which may occur immediately after engagement of the engagement elements, controlling the rise characteristics of the line pressure. The passage switching solenoid valve 44 has an equivalent orifice diameter "d" set to be twice or more as large as the diameter of the largest one d2 of the orifices d1, d2, d3, d4. Specifically, referring to FIG. 8, when sufficient pilot pressure is not supplied to the shift valves 41, 42, 43, oil is supplied to the reduction bake RD/B, the 2-4 brake 2-4/B, and the high clutch H/C, the amounts of which are proportional to the square of the diameters of the orifices d2, d3, d4 (d2 > d3 > d4) arranged on the hydraulic passages for the devices. When oil is supplied to the low clutch UC through the bypass passage 45, the quantity Q of oil supplied to the low clutch L/C is given by:

$$d = 2d2$$

$$Q = d^2 Q1/(d^2 + d2^2 + d3^2 + d4^2)$$
$$> 4d2^2 Q1/(4d2^2 + d2^2 + d2^2 + d2^2)$$
$$= 4Q1/7 \approx 0.57Q1$$

where Q1 is a discharge amount of the oil pump 22. It will be understood that about 60% of the discharge amount of the oil pump 22 can be supplied to the low clutch UC.

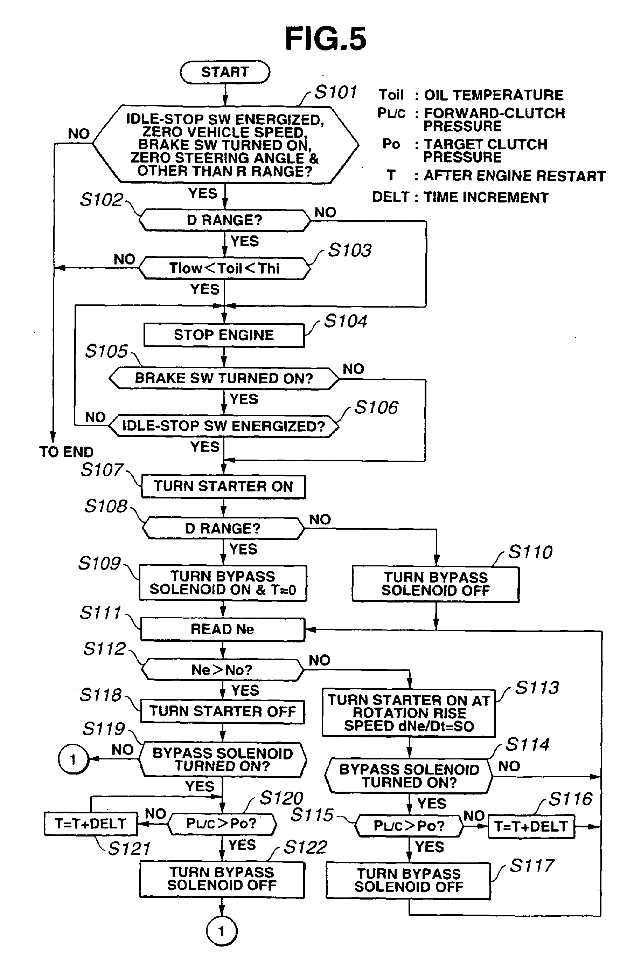

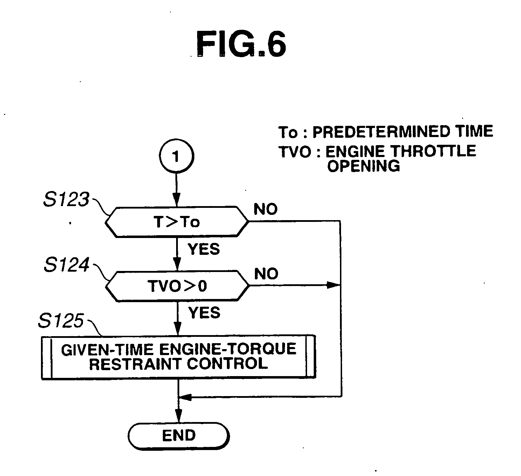

Referring to FIGS. 5 and 6, the contents of idle-stop control in the first embodiment are described.

At a step S101, it is determined whether or not the idle-stop switch 1 is energized, the vehicle speed is zero, the brake switch 2 is turned on, the steering angle is zero, and the range other than the R range is selected. Only if it is determined that all the conditions are met, flow proceeds to a step S102. Otherwise, idle-stop control is cancelled.

At the step S102, it is determined whether or not the select position is the drive (D) range. If it is determined that the select position is the D range, flow proceeds to a step S103. Otherwise, flow proceeds to a step S104.

At the step S103, it is determined whether or not an oil temperature Toil is higher than a lower-limit temperature Tlow and lower than an upper-limit temperature Thi. If it is determined that the conditions are met, flow proceeds to a step S104. Otherwise, flow comes to an end.

At the step S104, processing to stop the engine 10 is carried out.

At a step S105, it is determined whether or not the brake switch 2 is turned on. If it is determined that the brake switch 2 is turned on, flow proceeds to a step S106. Otherwise, flow proceeds to a step S107.

At the step S106, it is determined whether or not the idle-stop switch 1 is energized. If it is determined that the idle-stop switch 1 is energized, flow proceeds to the step S107. Otherwise, flow returns to the step S104.

At the step S107, processing to actuate the starter generator 60 is carried out.

At a step S108, it is determined whether or not the select position is the D range. If it is determined that the select position is the D range, flow proceeds to a step S109. Otherwise, flow proceeds to a step S110.

At the step S109, processing is carried out to turn on the solenoid of the passage switching solenoid valve 44 for switching the bypass passage 45 to the supply side, and to reset a count value of a timer T to zero.

At the step S110, processing is carried out to turn off the solenoid of the solenoid valve 44 for switching the bypass passage 45 to the non-supply side.

At a step S111, an engine rpm Ne is read.

At a step S112, it is determined whether or not the engine rpm Ne is greater than a predetermined rpm No. If it is determined that Ne > No, flow proceeds to a step S118. Otherwise, flow proceeds to a step S113.

At the step S113, processing is carried out to actuate the starter generator 60 at a rotation rise speed dNe/dT = So.

At a step S114, it is determined whether or not the solenoid of the solenoid valve 44 is turned on. If it is determined that the solenoid of the solenoid valve 44 is turned on, flow proceeds to a step S115. Otherwise, flow returns to the step S111 to continuously actuate the starter generator 60.

At the step S115, it is determined whether or not a low-clutch pressure $P_{L/C}$ sensed by the low-clutch sensor 46 is greater than a target pressure Po. If it is determined that $P_{L/C}$ > Po, flow proceeds to a step S117. Otherwise, flow proceeds to a step S116.

At the step S116, the timer T is incremented by a time increment DELT, then flow returns to the step S111.

At the step S117, processing is carried out to turn off the solenoid of the solenoid valve 44 for switching the bypass passage 45 to the non-supply side.

At the step S118, processing to stop actuation of the starter generator 60 is carried out.

At a step S119, it is determined whether or not the solenoid of the solenoid valve 44 is turned on. If it is determined that the solenoid of the solenoid valve 44 is turned on, flow proceeds to a step S120. Otherwise, flow proceeds to a step S123.

At the step S120, it is determined whether or not the low-clutch pressure Puc sensed by the low-clutch sensor 46 is greater than target pressure Po. If it is determined that Puc > Po, flow proceeds to a step S122. Otherwise, flow proceeds to a step S121.

At the step S121, the timer T is incremented by the time increment DELT, then flow returns to the step S120 to continuously timer count until the low-clutch pressure Puc exceeds target pressure Po.

At the step S122, processing is carried out to turn off the solenoid of the solenoid valve 44 for switching the bypass passage 45 to the non-supply side.

At the step S123, it is determined whether or not the timer count value T is greater than a predetermined value To. If it is determined that T > To, flow proceeds to a step S124. Otherwise, flow comes to an end.

At the step S124, it is determined whether or not a throttle opening TVO is greater than zero, i.e. an accelerator pedal is depressed. If it is determined that TVO > 0, flow proceeds to a step S125. Otherwise, flow comes to an end.

At the step S125, control is carried out to restrain engine torque during a given time.

Specifically, if a driver wants idle-stop control, the vehicle is at a standstill, a brake pedal is depressed, the steering angle is zero, and the R range is not selected, the engine 10 is stopped. The idle-stop switch 1 is a device through which the driver transmits his/her intention to perform or cancel idle stop. At the point when turning an ignition key, the idle-stop switch 1 is in energization. The reason why it is required that the steering angle is zero is to prohibit idle stop at the time of temporary stop of the running vehicle at right-hand turn and the like, for example.

The reason why idle-stop control is prohibited at the R range is that the sufficient oil amount cannot be supplied since the oil amount required for achieving completion of engagement is far greater than that required for engagement at the first speed. Specifically, as shown in the engagement table in FIG. 3, at the first speed, the low clutch L/C and the reduction brake RD/B need supply of the hydraulic pressure. Even in the state where the shift valves 41, 42, 43 do not switch the hydraulic passages, the hydraulic pressure is supplied to the reduction brake RD/B, and it needs to be supplied to the low clutch L/C only through the bypass passage 45. However, at the R range, the hydraulic pressure should also be supplied to the reverse clutch R/C and the low and reverse brake L&R/B, which makes difficult supply of the oil amount required for engagement before engine start.

Then, it is determined whether or not the oil temperature Toil is higher than the lower-limit temperature Tlow and lower than the upper-limit temperature Thi. The reason why such processing is carried out is that unless the oil temperature is higher than a predetermined value, the viscosity resistance of oil may not allow a predetermined oil amount to be charged before engine complete explosion, and that when the oil temperature is too higher, a decrease in volumetric efficiency of the pump 22 and an increase in leakage at valve parts due to reduction in viscosity resistance may not allow a predetermined oil amount to be charged before engine complete explosion .

Subsequently, when the brake pedal is released, it is determined that the driver has his/her intention to start the engine 10. Moreover, even with the brake pedal depressed, if it is shown that the idle-stop switch 1 is not energized, it is determined that the driver has his/her intention to start the engine 10. This determination aims to prevent the situation of impossible use of an air conditioner and the like due to a load applied to the battery when the engine 10 is stopped for idle stop, for example. That is, when feeling that the temperature in the cabin is high, the driver can cancel idle-stop control, allowing execution of control in further conformity with his/her intention. With this, the starter generator 60 is actuated to supply the hydraulic pressure to the line-pressure passage 40.

When the driver selects the range other than the D range: It is a case where the driver has no intention to start the vehicle, wherein at the step S110, the passage switching solenoid valve 44 selects ordinary passage. Thus, processing at the step S111 → step S112 → step S113 → step S114 is carried out repeatedly. When the engine rpm Ne reaches predetermined rpm No, the starter generator 60 is turned off, then flow proceeds to the step S123. At the step S123, it is determined whether or not the timer count value T is greater than predetermined value To, but the timer T is not incremented, and thus flow comes to an end.

When the driver selects the D range: It is a case where the driver has his/her intention to start the vehicle, wherein at the step S109, the passage switching solenoid valve 44 selects bypass passage 45 to carry out quick supply of the hydraulic pressure to the low clutch L/C. Thus, processing at the step S111 → step S112 → step S113 → step S114 → step S115 → step S116 is carried out to turn on the solenoid of the passage switching solenoid valve 44 arranged on the bypass passage 45 for communication between the oil pump 22 and the low clutch L/C immediately upstream thereof, achieving switching to the communicating state. Specifically, at engine stop, oil which has been supplied to the low clutch UC is discharged through the hydraulic passage, having reduced hydraulic pressure. As a result, at engine restart, the low clutch L/C is disengaged which is to be engaged during running at the first speed, and thus needs to be supplied with the hydraulic pressure. Moreover, at the same time, a count value of the timer T for measuring a time from start of the starter generator 60 is reset to zero.

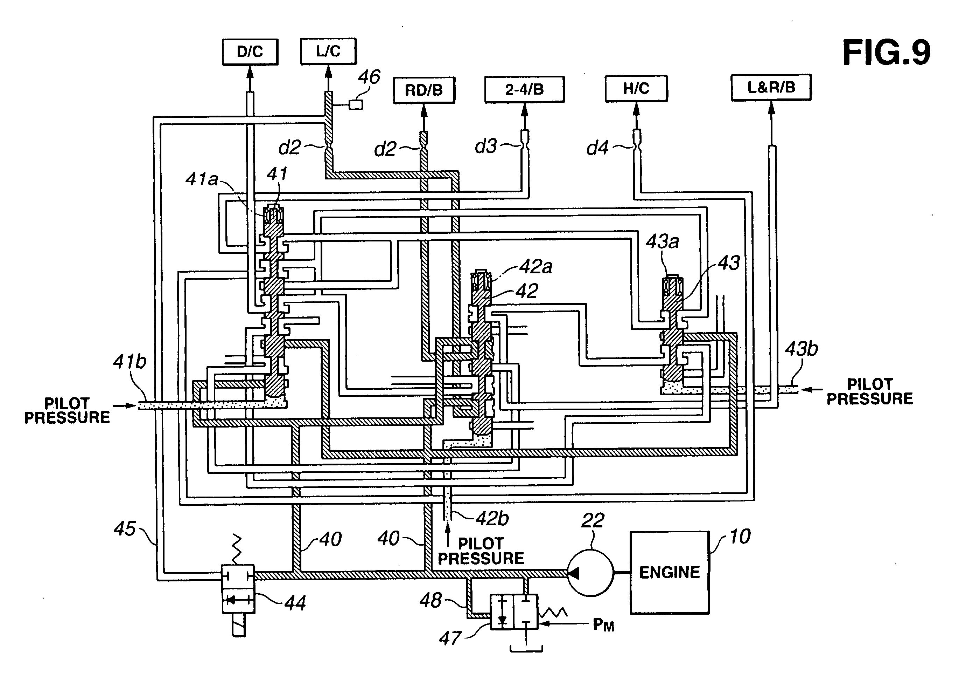

Then, at engine restart, the starter generator 60 rotates the engine 10, driving the oil pump 22. FIG. 8 shows oil flow immediately after driving the oil pump 22. Since sufficient pilot pressure is not supplied to actuate the shift valves 41, 42, 43, oil flows through the hatched section in the hydraulic circuit shown in FIG. 8. At that time, since the passage switching solenoid valve 44 is in the communicating state, oil is also supplied to the low clutch L/C. FIG. 9 shows oil flow after supplying the pilot pressure to the shift valves 41, 42, 43.

In accordance with determination whether or not the engine rpm Ne is greater than predetermined rpm No, it is determined whether or not the engine 10 has complete explosion. If it is determined that Ne ≤ No, i.e. the engine 10 does not have completer explosion, flow proceeds to the step S113 where the rotation rise speed dNe/dT of the starter generator 60 is set at predetermined value So to continuously crank the engine 10. Then, it is determined whether or not the low-clutch pressure $P_{L/C}$ sensed by the low-clutch pressure sensor 46 reaches target pressure Po. If it is determined that the low-clutch pressure $P_{L/C}$ does not reaches target pressure Po, the timer T is incremented to obtain a timer count value T + DELT, and the above processing is carried out repeatedly.

When the low-clutch pressure is secured at actuation of the starter generator: When the engine rpm Ne does not exceed predetermined rpm No, the starter generator 60 is actuated continuously. However, if the passage switching solenoid valve 44 is in the communicating state, and that the low-clutch pressure $P_{L/C}$ reaches target pressure Po, the solenoid valve 44 is put in the non-communicating state, and the starter generator 60 is actuated until the engine rpm Ne reaches predetermined rpm No.

**[0072]** Specifically, the low-clutch pressure $P_{L/C}$ is sensed by the low-clutch pressure sensor 46. Thus, even at actuation of the starter generator 60, if the low-clutch pressure $P_{L/C}$ reaches target pressure Po, the passage switching solenoid valve 44 can be put in the non-communicating state. And when required engagement pressure is secured, further oil supply is not needed through the bypass passage 45. It is understood that detection of the low-clutch pressure $P_{L/C}$ allows achievement of the non-communicating state of the bypass passage 45 at the optimum timing, resulting in efficient use of the discharge amount of the oil pump 22.

When the low-clutch pressure is secured after stopping the starter generator: When the driver selects the D range to actuate the starter generator 60, and that the engine rpm Ne reaches predetermined rpm No before the low-clutch pressure $P_{L/C}$ reaches target pressure Po, processing at the step S118 → step S119 → step S120 → step S121 is carried out. At that time, increment of the timer T which has started after actuation of the starter generator 60 is continuously carried out to measure a time until the low-clutch pressure $P_{L/C}$ is secured. When the low-clutch pressure $P_{L/C}$ reaches target pressure Po, the solenoid of the passage switching solenoid valve 44 is turned off.

Determination of a time until the low-clutch pressure is secured after engine restart: At the step S123, it is determined whether or not the timer count value T is greater than predetermined value To. If it is determined that T ≤ To, it is determined that low-clutch pressure $P_{L/C}$ can be secured smoothly, and flow comes to an end.

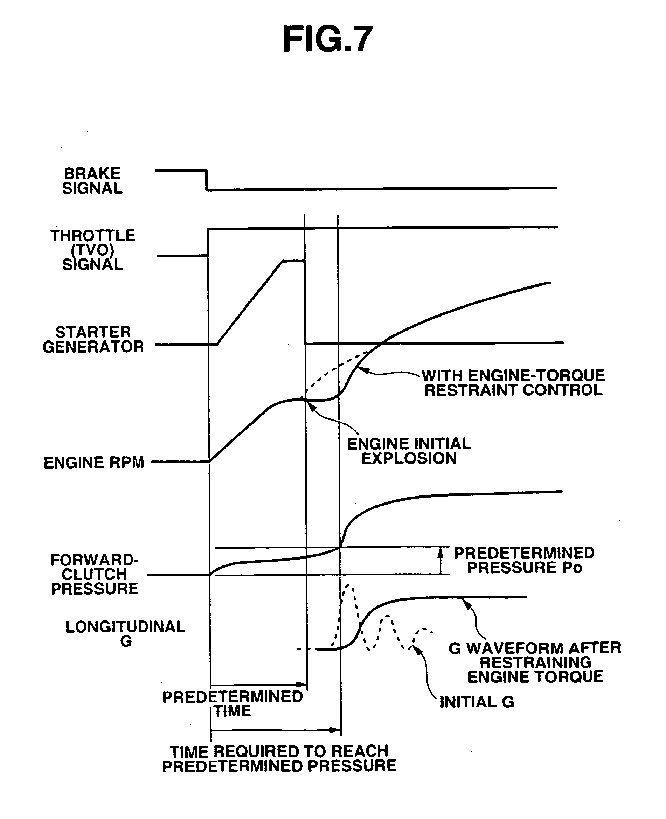

On the other hand, if it is determined that T > To, flow proceeds to the step S124. If it is determined that the accelerator pedal is depressed, flow proceeds to the step S125 where control is carried out to restrain engine torque during a given time. FIG. 7 is a time chart with/without engine-torque restraint control when the timer count value T is greater than predetermined value To. Referring to FIG. 7, the engine rpm Ne without engine-torque restraint control is shown by dotted line. In such a way, greater time count value T shows a case where the engine 10 has complete explosion, sufficient discharge capacity of the oil pump 22 is secured, and engine torque is increased. In this state, the low-clutch pressure $P_{L/C}$ is secured finally, so that the low clutch L/C is engaged with input torque being greater, producing an engagement shock which will cause a vertical variation in longitudinal acceleration (G) of the vehicle.

Then, at the step S125, control is carried out to restrain engine torque during a given time, providing engine torque roughly equal to that immediately after engine complete explosion, achieving engagement of the low clutch L/C. This allows achievement of smooth start acceleration along the longitudinal G shown by solid line in FIG. 7. It is desirable that a time for restraining engine torque corresponds roughly to a time required from engine initial explosion to the low-clutch pressure $P_{L/C}$ reaching target pressure Po.

As described above, in the first embodiment, if, at engine restart after idle stop, it is determined that the low-clutch pressure $P_{L/C}$ does not reach target pressure Po, a torque reduction command is provided to the ECU 50, even if the throttle opening TVO is detected, until the low-clutch pressure $P_{L/C}$ reaches target pressure Po. Specifically, even when the accelerator pedal is depressed at engine restart, i.e. the driver has his/her intention to start the vehicle, if sufficient low-clutch pressure $P_{L/C}$ is not obtained, a torque reduction command is provided to reduce input torque to the low clutch L/C. This allows prevention of an engagement shock to be produced at engine restart by engagement of the low clutch L/C with engine rotation highly increased by depressing the accelerator pedal in the neutral state as it were.

Moreover, the low-clutch pressure Puc is sensed by the low-clutch pressure sensor 46. Thus, even at actuation of the starter generator 60, if the low-clutch pressure Puc reaches target pressure Po, the passage switching solenoid valve 44 can be put in the non-communicating state. And when required engagement pressure is secured, further oil supply is not needed through the bypass passage 45. It is understood that detection of the low-clutch pressure Puc allows achievement of the non-communicating state of the bypass passage 45 at the optimum timing, resulting in efficient use of the discharge amount of the oil pump 22.

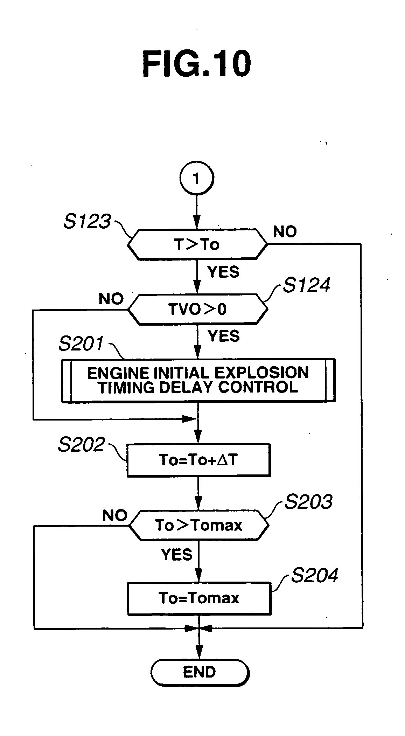

Referring to FIG. 10, there is shown second embodiment of the present teaching which is essentially the same as the first embodiment shown in FIGS. 5 and 6 except processing at steps S201-S204.

At the step S201, control is carried out to delay the engine initial explosion timing.

At the step S202, a value obtaining by adding $\Delta T$ the predetermined time To for determining a timer count value at the step S123 is set as a new predetermined time To.

At the step S203, it is determined whether or not the new predetermine time To is greater than a maximum value Tomax. If it is determined that To $\leq$ Tomax, flow comes to and end, whereas if it is determined that To > Tomax, flow proceeds to the step S204.

At the step S204, the maximum time Tomax is set as predetermined time To.

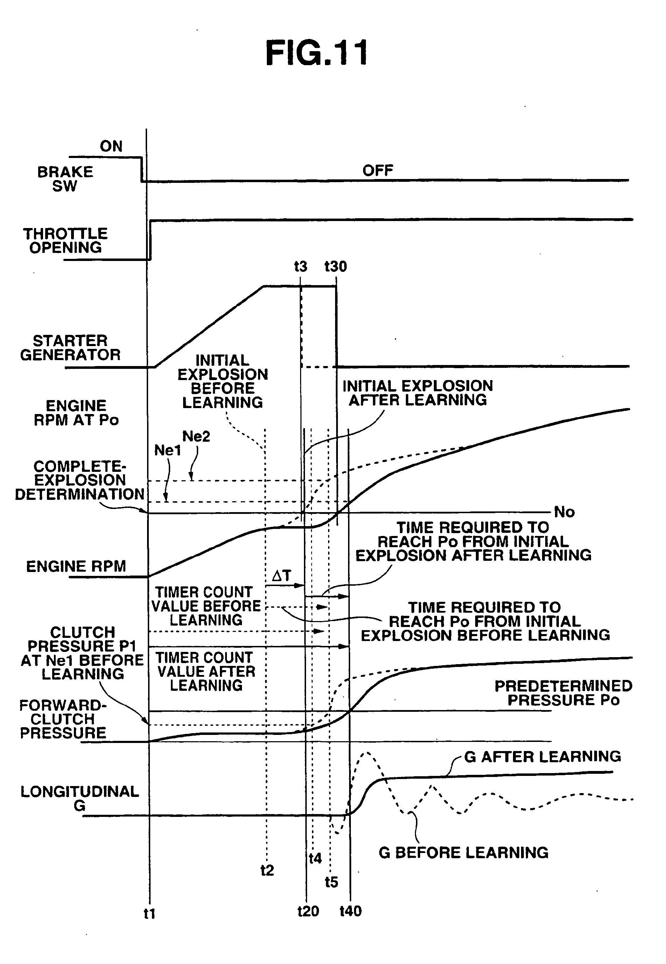

Referring to FIG. 11, the above processing is described.

Shock due to timing lag: Referring to FIG. 11, a time chart is shown by dotted line, wherein before learning, the timing from engine initial explosion to the forward-clutch or low-clutch pressure reaching target pressure Po is lagged to produce a shock.

At time t1, with the brake released and the accelerator pedal depressed, the starter generator 60 is driven to crank the engine 10. Then, the timer T is reset to start increment. During a period of time t1 to time t2, cranking of the starter generator 60 causes increasing of the engine rpm Ne, and driving of the oil pump 22. Moreover, due to the D range selected, the low-clutch pressure Puc is supplied through the bypass passage 44 switched by the passage switching solenoid valve 45, which increases gradually.

At time t2, the engine rpm Ne reaches a predetermined rpm. After a lapse of a predetermined time, the ECU 50 provides an ignition signal to the engine 10, carrying out initial explosion.

At time t3, the engine rpm Ne reaches a complete-explosion determination rpm No, turning the starter generator 60 off. After complete explosion, the engine rpm Ne increases by self-rotation.

During a period from time t1 to time t5 that the low-clutch pressure Puc reaches predetermined pressure Po, timer count is carried out. Here, a desirable engine rpm causing no start shock or the like when the low-clutch pressure Puc reaches predetermined pressure Po is given by Ne1, and a desirable time required from output of an engine-restart command to achievement of the predetermined pressure Po is given by predetermined time To. The predetermined time To is determined in accordance with an engine initial timing set by the ECU 50. (Suppose that an increasing manner of the engine rpm Ne after initial explosion followed by complete explosion and self-rotation is roughly constant. If too much time elapses after initial explosion, it can be estimated that an excessive increase in the engine rpm Ne occurs. Thus, engagement of the low clutch UC is desirable within a time period that an excessive increase in the engine rpm Ne does not occur).

When a period of time t1 to time t5 required for the low-clutch pressure Puc to reach predetermined pressure Po is longer than the predetermined time To, the timing from start of cranking of the starter to engine initial explosion is constant, which means that time t5 required from engine initial explosion (time t2) to achievement of the predetermined pressure Po is longer. When igniting the engine 10 (time t2), the engine rpm Ne starts to increase in a stroke from the cranking rpm of the starter generator 60. And the engine 10 comes in complete explosion (time t3). When the engine rpm Ne reaches desirable engine rpm Ne1 (time t4) for engagement of the low clutch L/C, the low-clutch pressure $P_{L/C}$ has a pressure P1 smaller than the predetermined pressure Po, so that the low clutch L/C cannot be engaged yet.

The engine rpm Ne increases with a lapse of time, and becomes equal to Ne2 when the low-clutch pressure $P_{L/C}$ reaches predetermined pressure Po (time t5). Specifically, the discharge pressure of the oil pump 22 increases with an increase in the engine rpm Ne. However, since longer time t5 is required for the low-clutch pressure $P_{L/C}$ to reach predetermined pressure Po due to secular deterioration and the like, the engine rpm Ne increases excessively (Ne2). Thus, torque input from the engine 10 to the low clutch L/C becomes greater, having possibility of occurrence of a start shock as seen from the longitudinal G shown by dotted line in FIG. 11.

Engine initial explosion timing delay control: A command is provided to the ECU 50 to delay the engine initial explosion timing by $\Delta T$. Then, the engine rpm Ne is maintained at the cranking-state engine rpm by the starter generator 60 up to time t20, resulting in a $\Delta T$ increase in the cranking-state engine rpm. During this period, the hydraulic pressure is supplied from the oil pump 22 to the low clutch L/C, so that a time required from engine initial explosion (time t20) to the low-clutch pressure $P_{L/C}$ reaching predetermined pressure Po (t20-t30 < t2-t4) becomes shorter.

At time t40, the engine rpm Ne is equal to the desirable engine rpm Ne1 for engagement of the low clutch L/C, having no occurrence of an excessive increase in torque input to the low clutch L/C due to excessively increased engine rpm Ne. This allows execution of smooth start control.

Moreover, since the engine initial explosion timing is delayed by $\Delta T$, the predetermined time To used for comparison of a timer count value is increased by $\Delta T$ from the next time. With this, even if a time required for achievement of the predetermined pressure Po is increased, a reduction in time from engine initial explosion to achievement of the predetermined pressure Po allows a reduction in start shock.

Further, the predetermined time To is provided with maximum or limiter value Tomax, preventing engine start from being too slow.

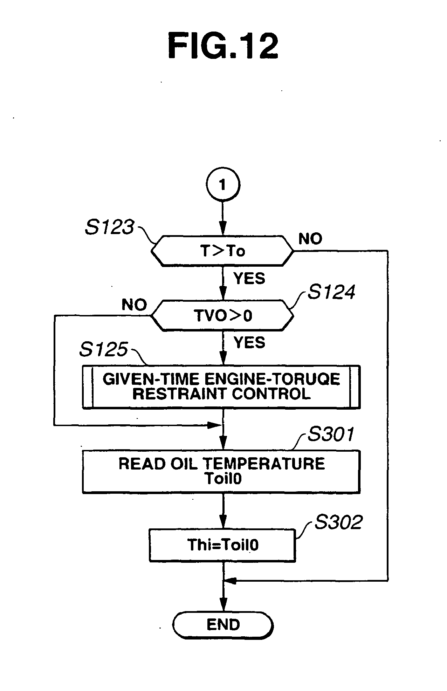

Referring to FIG. 12, there is shown third embodiment of the present teaching which is essentially the same as the first embodiment shown in FIGS. 5 and 6 except processing at steps S301 and S302.

At the step S301, an oil temperature Toil0 is read.

At the step S302, the upper-limit value Thi used for determination of the oil temperature Toil at the step S103 is updated to oil temperature Toil0 read at the step S301.

Specifically, when supply of the hydraulic pressure to the low clutch UC takes much time, control is carried out to restrain engine torque during a given time. As reasons why supply of the hydraulic pressure to the low clutch UC takes much time, there are a reduction in the volume efficiency of the oil pump 22 due to lowering of viscosity resistance with a temperature rise and an increase in the oil leakage from different valve parts. Thus, update of the upper-limit value Thi of the oil temperature Toil can avoid carrying out idle-stop control at the oil temperature when performing torque reduction control, allowing stable idle-stop control.

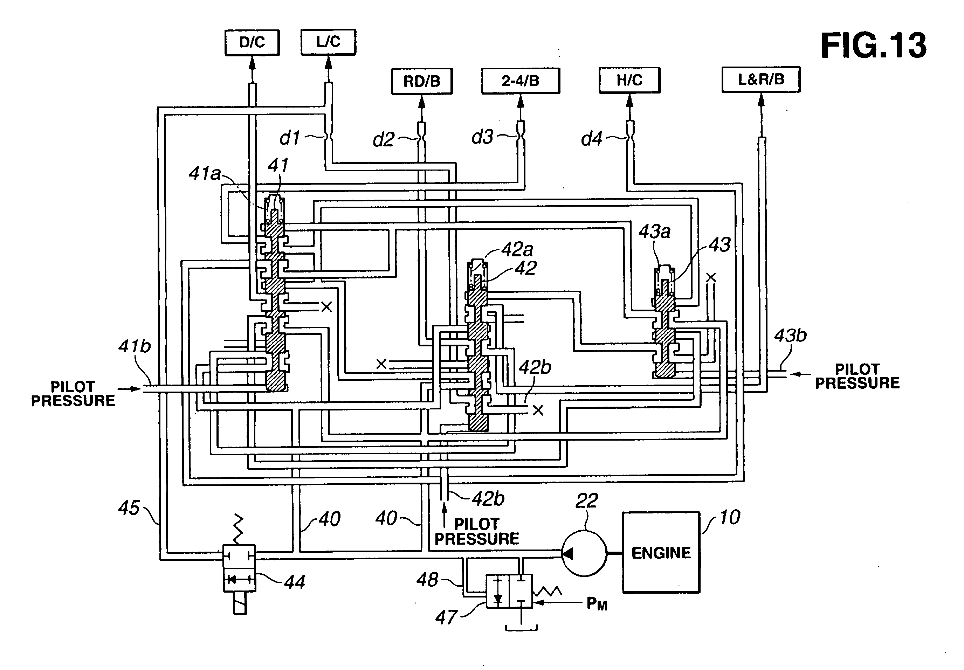

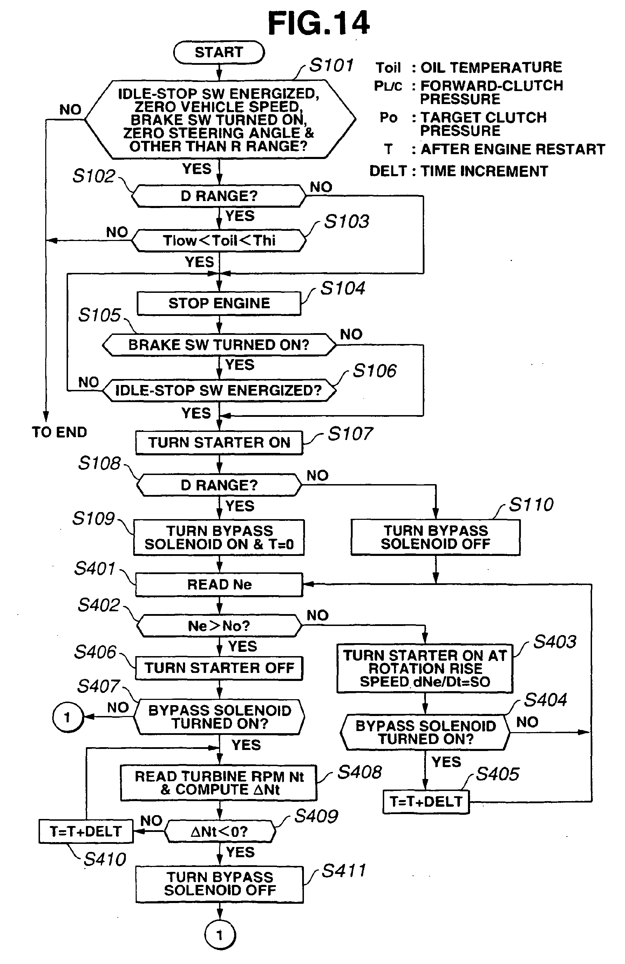

Referring to FIGS. 13 and 14, there is shown fourth embodiment of the present teaching which is essentially the same as the first embodiment shown in FIGS. 4-6 except no arrangement of the low-clutch pressure sensor 46 for sensing the engagement pressure of the low clutch UC, and processing at steps S401-S411.

At the step S401, the engine rpm Ne is read.

At the step S402, it is determined whether or not the engine rpm Ne is greater than predetermined engine rpm No. If it is determined that Ne > No, flow proceeds to the step S406, whereas if it is determined that Ne ≤ No, flow proceeds to the step S403.

At the step S403, processing is carried out to actuate the starter generator 60 at the rotation rise speed $dNe/dT = So$.

At the step S404, it is determined whether or not the solenoid of the passage switching solenoid valve 44 is turned on. If it is determined that the solenoid of the solenoid valve 44 is turned on, flow proceeds to the step S405. Otherwise, flow returns to the step S401 to continuously actuate the starter generator 60.

At the step S406, processing to stop actuation of the starter generator 60 is carried out.

At the step S407, it is determined whether or not the solenoid of the solenoid valve 44 is turned on. If it is determined that the solenoid of the solenoid valve 44 is turned on, flow proceeds to the step S408. Otherwise, flow proceeds to the step S123.

At the step S408, a turbine rpm Nt is read to compute a turbine rpm variation ΔNt, then flow proceeds to the step S409.

At the step S409, it is determined whether or not the turbine rpm variation ΔNt is smaller than zero. If it is determined that ΔNt < 0, flow proceeds to the step S411, whereas If it is determined that ΔNt > 0, flow proceeds to the step S410.

At the step S410, the timer T is incremented by the time increment DELT, then flow returns to the step S408 to continuously timer count until the turbine rpm variation ΔNt becomes negative.

At the step S411, processing is carried out to turn off the solenoid of the solenoid valve 44 for switching the bypass passage 45 to the non-supply side.

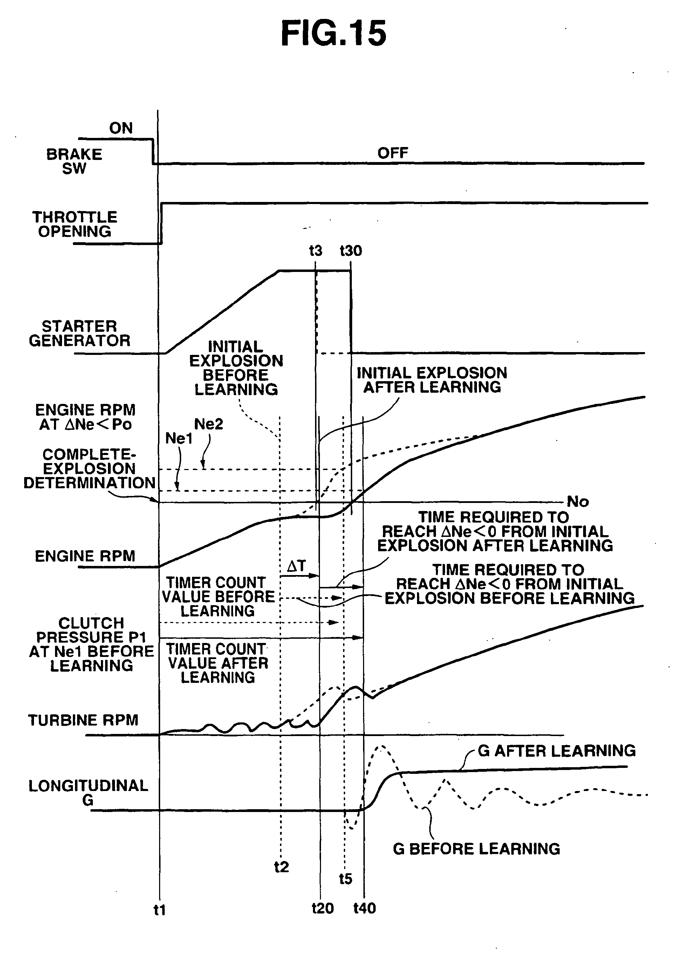

FIG. 15 is a time chart when combining idle-stop control in the fourth embodiment with engine initial explosion timing delay control in the second embodiment. The contents of control are essentially the same as those described above except that it is determined whether or not the low-clutch pressure $P_{L/C}$ reaches predetermined pressure Po in accordance with the turbine rpm Nt.

Referring to FIG. 15, the difference in determination of the low-clutch pressure $P_{L/C}$ is described. At the steps S401-S405, the timer T is incremented from time t1, and the engine 10 is put in complete explosion by cranking of the starter generator 60. After determining that the engine 10 has complete explosion, the starter generator 60 is turned off. And it is determined whether or not the D range is selected, and the passage switching solenoid valve 44 selects bypass passage 45. If it is determined that solenoid valve 44 selects bypass passage 45, the turbine rpm Nt is read to compute the turbine rpm variation ΔNt.

At the step S409, if it is determined that ΔNt < 0 (at time t4 before learning, and at time t40 after learning), the solenoid valve 44 switches from the bypass passage 45 to the ordinary passage.

Specifically, at engine restart, the engine 10 is cranked by the starter generator 60. At that time, the turbine rpm Nt varies. But when it is determined that engine complete explosion is achieved (at time t3 before learning, and at time t30 after learning), engine output torque is stabilized up to a point, which is input to the automatic transmission 20 to rotate the turbine. The low clutch L/C receives hydraulic pressure through the bypass passage 45, producing a certain engagement force. The low clutch L/C has one side connected to the turbine and another side connected to the driving wheels. Since the vehicle starts from a standstill, a fixing force resulting from inertial force acts on the driving wheels. Through the low clutch L/C, the inertia force causes the turbine rpm Nt to drop once (at time t4 before learning, and at time t40 after learning).

When the turbine rpm Nt increases and then drops once (i.e. the turbine rpm variation ΔNt is negative), the low clutch UC secures a certain engagement force, i.e. so-called pre-charge is completed. Switching from the bypass passage 45 to the ordinary passage at that timing allows smooth execution of switching.

The description about processing at the step S123 and subsequent is omitted, since it is the same as in the second embodiment shown in FIG. 10.

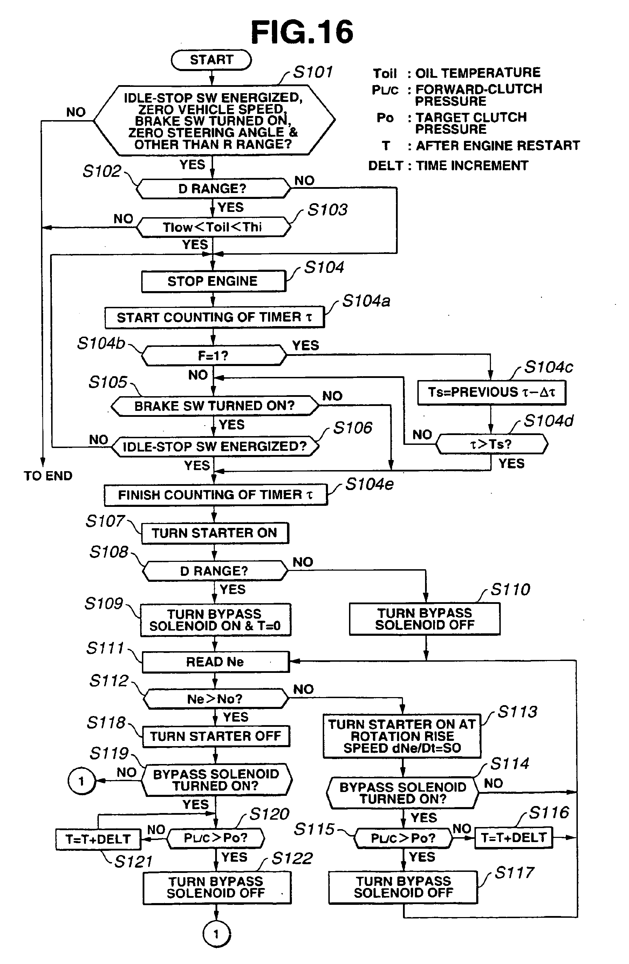

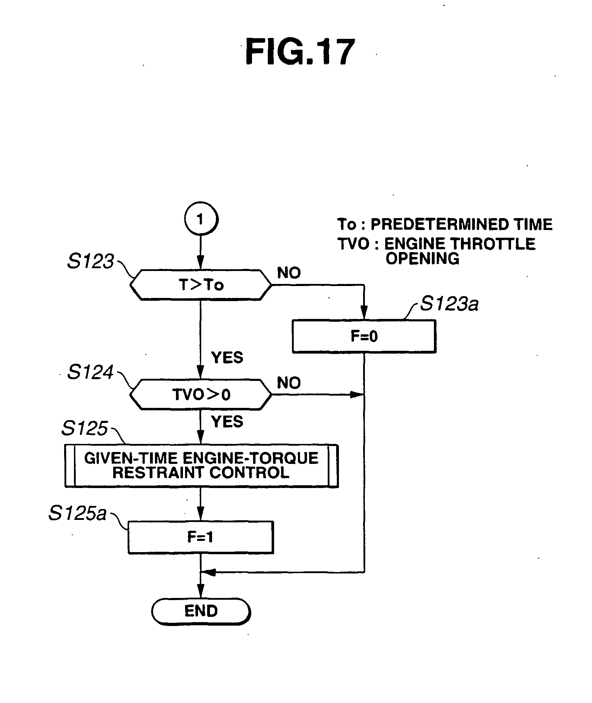

Referring to FIGS. 16 and 17, there is shown fifth embodiment of the present teaching which is essentially the same as the first embodiment except processing at steps S104a-S104e, S123a, and S125a.

At the step S104a, counting of the timer $\tau$ is started.

At the step S104b, it is determined whether or not an automatic restart flag F is set at 1. If it is determined that F =1, flow proceeds to the step S104c. Otherwise, flow proceeds to the step S105.

At the step S104c, a predetermined automatic restart time Ts is set at a time shorter than a previous timer value $\tau$ by a predetermined value $\Delta\tau$.

At the step S104d, it is determined whether or not the timer $\tau$ is greater than the predetermined automatic restart time Ts. If it is determined that $\tau < $ Ts, flow proceeds to the step S105, whereas if it is determined that $\tau > $ Ts, flow proceeds to the step S104e.

At the step S104e, counting of the timer $\tau$ is finished.

At the step S123a, the automatic restart flag F is reset to zero.

At the step S125a, the automatic restart flag F is set at 1.

Specifically, when the engine 10 is stopped at the step S104, increment of the timer $\tau$ is started to measure an engine stop duration. If achievement of the engagement pressure of the low clutch UC is delayed to carry out given-time engine-torque restraint control, the automatic restart flag F is set at 1 at the step S125a due to occurrence of the conditions of prohibiting smooth start.

And if it is determined at the step S104b that the automatic restart flag F is set at 1, the predetermined automatic restart time Ts is set at a time $\tau - \Delta\tau$ shorter than an engine stop duration at previous given-time engine-torque restraint control by a predetermined value at the step S104c. If a timer count value becomes greater than Ts, the engine 10 is restarted regardless of the state of the brake switch 2 and the idle-stop switch 1. Thus, due to longer idle-stop duration, oil within the hydraulic passages for the low clutch UC is discharged completely, allowing prevention of a time required for achievement of the predetermined low-clutch pressure Po from being delayed.

Having described the present teaching with regard to the illustrative embodiments, the present teaching is not limited thereto, and various changes and modifications can be made without departing from the scope of the present teaching. By way of example, the present teaching is applicable to not only to the low clutch, but also to any of other forward engagement elements of the automatic transmission. Moreover, in the illustrative embodiments, the teaching is applied to the forward engagement element of the gear-type multiple-speed automatic transmission. Alternatively, the teaching can be applied to the forward engagement element of a continuously variable transmission (CVT).

**Claims**

1. An automatic transmission (20) for a vehicle having idle-stop control means for controlling idle start and idle stop of an engine (10) provided with an engine control unit (50) in accordance with predetermined idle-stop conditions during idle running of the vehicle, comprising
means for detecting a value equivalent to an engagement pressure (PL/C) of a forward engagement element (UC),
means for determining if the equivalent value detected after a lapse of a predetermined time from engine restart reaches a predetermined value, and
a timer for counting a time (T) from a point of engine restart after idle stop to a point that the determining means determine that the equivalent value reaches the predetermined value, **characterized in that** if the time (T) is greater than a predetermined timer value (To), the idle-stop control means provide a command to the engine control unit (50), at next engine restart after idle stop, to delay an initial explosion timing of the engine (10) by a predetermined delay time.

2. An automatic transmission according to claim 1, **characterized by** an idle-stop timer for counting an idle-stop time from idle stop to engine restart, wherein the idle-stop control means store the idle-stop time counted when the determining means determine that the equivalent value does not reach the predetermined value, and wherein when the idle-stop time becomes equal to a value smaller than the idle-stop time by a predetermined idle-stop time value after next idle stop, the idle-stop control means provide an engine operating signal to the ECU (50).

3. An automatic transmission according to claim 1 or 2, **characterized in that** the determining means comprise means for detecting a turbine rpm (Nt) as an input rpm of the automatic transmission (20) and means for calculating a variation in the detected turbine rpm (Nt), wherein when the calculated variation is positive, the determining means determine that the equivalent value does not reach the predetermined value, whereas when the calculated variation is negative, the determining means determine that the equivalent value reaches the predetermined value.

4. A method of controlling an automatic transmission for a vehicle having idle-stop control means for controlling idle start and idle stop of an engine (10) in accordance with predetermined idle-stop conditions during idle running of the vehicle, comprising the steps of:

detecting a value equivalent to an engagement pressure (PL/C) of a engagement element (L/C), determining if the equivalent value detected after a lapse of a predetermined time from engine restart reaches a predetermined value, and counting a time from a point of engine restart after idle stop to a point that it is determined that the equivalent value reaches the predetermined value, **characterized in that** if the time (T) is greater than a predetermined timer value (To), at next engine restart after idle stop, delaying an initial explosion timing of the engine (10) by a predetermined delay time.

5. A method of controlling an automatic transmission according to claim 4, **characterized by** counting an idle-stop time from idle stop to engine restart, wherein the idle-stop control means store the idle-stop time counted when it is determined that the equivalent value does not reach the predetermined value, and wherein when the idle-stop time becomes equal to a value smaller than the idle-stop time by a predetermined idle-stop time value after next idle stop, the idle-stop control means provide an engine operating signal to the ECU (50).

6. A method of controlling an automatic transmission according to claim 4 or 5, **characterized in that** the determining step comprises detecting a turbine rpm (Nt) as an input rpm of the automatic transmission (20) and calculating a variation in the detected turbine rpm (Nt), wherein when the calculated variation is positive, it is determined that the equivalent value does not reach the predetermined value, whereas when the calculated variation is negative, it is determined that the equivalent value reaches the predetermined value.

**Patentansprüche**

1. Automatikgetriebe (20) für ein Fahrzeug mit einer Leerlaufstopp- Steuereinrichtung zum Steuern des Leerlaufstarts und eines Leerlaufstopps eines Motors (10), versehen mit einer Motorsteuerungseinheit (50) in Übereinstimmung mit vorbestimmten Leerlaufstoppbedingungen während der Fahrt des Fahrzeuges im Leerlauf, aufweisend eine Einrichtung zum Erfassen eines Wertes, der zu einem Eingriffsdruck (PUC) eines Vorwärts- Eingriffselements (UC) äquivalent ist, eine Einrichtung zum Bestimmen, ob der Äquivalenzwert, erfasst nach einem Ablauf einer vorbestimmten Zeit vom Motorneustart, einen vorbestimmten Wert erreicht, und einen Zeitgeber zum Zählen einer Zeit (T) von einem Punkt des Motorneustarts nach dem Leerlaufstopp bis zu einem Punkt, zu dem die Bestimmungseinrichtung bestimmt, dass der Äquivalenzwert den vorbestimmten Wert erreicht, **dadurch gekennzeichnet, dass** wenn die Zeit (T) größer als ein vorbestimmter Zeitgeberwert (To) ist, die Leerlaufstopp-Steuereinrichtung einen Befehl zu der Motorsteuerungseinheit (50) gibt, bei dem nächsten Motmeustart nach dem Leerlaufstopp, einen anfänglichen Zündexplosionszeitpunkt des Motors (10) um eine vorbestimmte Verzögerungszeit zu verzögern.

2. Automatikgetriebe nach Anspruch 1, **gekennzeichnet durch** einen Leerlaufstoppzeitgeber zum Zählen einer Leerlaufstoppzeit von dem Leerlaufstopp bis zu dem Motorneustart, wobei die Leerlaufstopp- Steuereinrichtung die Leerlaufstoppzeit speichert, gezählt, wenn die Bestimmungseinrichtung bestimmt, das der Äquivalenzwert den vorbestimmten Wert nicht erreicht, und wobei wenn die Leerlaufstoppzeit um einen vorbestimmten Leerlaufstoppzeitwert nach dem nächsten Leerlaufstopp gleich zu einem Wert kleiner als die Leerlaufstoppzeit wird, die Leerlaufstopp- Steuereinrichtung ein Motorbetriebssignal an die ECU (50) gibt.

3. Automatikgetriebe nach Anspruch 1 oder 2, **dadurch gekennzeichnet, dass** die Bestimmungseinrichtung eine Einrichtung zum Bestimmen einer Turbinendrehzahl (Nt) als die Eingangsdrehzahl des Automatikgetriebes (20) und eine Einrichtung zum Berechnen einer Variation in der erfassten Turbinendrehzahl (Nt) aufweist. , wobei, wenn die berechnete Variation positiv ist, die Bestimmungseinrichtung bestimmt, dass der Äquivalenzwert den vorbestimmten Wert nicht erreicht, während wenn die berechnete Variation negativ ist, die Bestimmungseinrichtung bestimmt, dass der Äquivalenzwert den vorbestimmten Wert erreicht.

4. Verfahren zum Steuern eines Automatikgetriebes für ein Fahrzeug mit einer Leerlaufstopp- Steuereinrichtung zum Steuern des Leerlaufstarts und Leerlaufstops eines Motors (10) in Übereinstimmung mit vorbestimmten Leerlaufbedingungen während des Fahrens des Fahrzeuges im Leerlauf, das die Schritte aufweist von: Erfassen eines Wertes, der zu einem Eingriffsdruck (PUC) eines Eingriffselements (L/C) äquivalent ist, Bestimmen, ob der Äquivalenzwert, erfasst nach einem Ablauf einer vorbestimmten Zeit von einem Motorneustart, einen vorbestimmten Wert erreicht, und Zählen einer Zeit von einem Punkt vom Motorneustart nach dem Leerlaufstopp zu einem Punkt, bei dem es bestimmt wird, dass der Äquivalenzwert den vorbestimmten Wert erreicht,

**dadurch gekennzeichnet, dass** wenn die Zeit (T) größer als ein vorbestimmter Zeitgeberwert (To), bei dem nächsten Motomeustart nach dem Leerlaufstopp ist, ein Zündexplosionszeitpunkt des Motors (10) um eine vorbestimmte Verzögerungszeit verzögert wird.

5. Verfahren zum Steuern eines Automatikgetriebes nach Anspruch 4, **gekennzeichnet durch** Zählen einer Leerlaufstoppzeit von dem Leerlaufstopp bis zu dem Motomeustart, wobei die Leerlaufstopp-Steuereinrichtung die Leerlaufstoppzeit speichert, die gezählt wird, wenn es bestimmt wird, das der Äquivalenzwert den vorbestimmten Wert nicht erreicht, und wobei, wenn die Leerlaufstoppzeit um eine vorbestimmte Leerlaufstoppzeit nach dem nächsten Leerlaufstopp gleich wird zu einem Wert kleiner als die Leerlaufstoppzeit wird, die Leerlaufstopp-Steuereinrichtung ein Motorbetriebssignal an die ECU (50) gibt.

6. Verfahren zum Steuern eines Automatikgetriebes nach Anspruch 4 oder 5, **dadurch gekennzeichnet, dass** der Bestimmungsschritt aufweist das Erfassen einer Turbinendrehzahl (Nt) als eine Eingangsdrehzahl des Automatikgetriebes (20) und Berechnen einer Variation in der erfassten Turbinendrehzahl (Nt), wobei, wenn die berechnete Variation positiv ist, bestimmt wird, dass der Äquivalenzwert nicht den vorbestimmten Wert erreicht, während, wenn die berechnete Variation negativ ist, bestimmt wird, dass der Äquivalenzwert den vorbestimmten Wert erreicht.

**Revendications**

1. Transmission automatique (20) pour un véhicule avec un moyen de commande d'arrêt en position de ralenti pour commander le démarrage au ralenti et l'arrêt au ralenti d'un moteur (10) muni d'une unité de commande de moteur (50) en accord avec des conditions d'arrêt au ralenti prédéterminées pendant la marche au ralenti du véhicule, comprenant

des moyens pour détecter une valeur équivalente à une pression d'engagement (PL/C) d'un élément d'engagement avant (L/C),
des moyens pour déterminer si la valeur équivalente détectée après l'écoulement d'un temps prédéterminé depuis le redémarrage du moteur atteint une valeur prédéterminée, et
une horloge pour compter un temps (T) à partir d'un point de redémarrage du moteur après l'arrêt au ralenti à un point où les moyens de détermination déterminent que la valeur équivalente atteint la valeur prédéterminée, **caractérisée en ce que** si le temps (T) est supérieur à une valeur d'horloge prédéterminée (To), le moyen de commande d'arrêt en position de ralenti fournit une commande à l'unité de commande de moteur (50), au prochain redémarrage du moteur après l'arrêt au ralenti, pour retarder un temps d'explosion initial du moteur (10) selon un temps de retard prédéterminé.

2. Transmission automatique selon la revendication 1, **caractérisée par** une horloge d'arrêt au ralenti pour compter un temps d'arrêt au ralenti à partir de l'arrêt au ralenti au redémarrage du moteur,

où les moyens de commande de l'arrêt au ralenti stockent le temps d'arrêt au ralenti compté lorsque les moyens de détermination déterminent que la valeur équivalente n'atteint pas la valeur prédéterminée, et
où lorsque le temps d'arrêt au ralenti devient égal à une valeur inférieure au temps d'arrêt au ralenti d'une valeur de temps d'arrêt au ralenti prédéterminée après le prochain arrêt au ralenti, les moyens de commande d'arrêt au ralenti fournissent un signal d'opération de moteur à la ECU (50).

3. Transmission automatique selon la revendication 1 ou 2, **caractérisé en ce que** les moyens de détermination comprennent des moyens pour détecter une vitesse de rotation de la turbine (Nt) comme vitesse de rotation d'entrée de la transmission automatique (20) et des moyens pour calculer une variation dans la vitesse de rotation détectée de la turbine (Nt), où lorsque la variation calculée est positive, les moyens de détermination déterminent que la valeur équivalente n'atteint pas la valeur prédéterminée, alors que lorsque la variation calculée est négative, les moyens de détermination déterminent que la valeur équivalente atteint la valeur prédéterminée.

4. Procédé de commande d'une transmission automatique pour un véhicule comportant un moyen de commande d'arrêt en position de ralenti pour commander le démarrage en position de ralenti et l'arrêt en position de ralenti d'un moteur (10) en accord avec des conditions d'arrêt en position de ralenti prédéterminées pendant la marche au ralenti du véhicule, comprenant les étapes consistant à:

détecter une valeur équivalente à une pression d'engagement (PL/C) d'un élément d'engagement (L/C),
déterminer si la valeur équivalente détectée après un écoulement d'un temps prédéterminé depuis le redémarrage du moteur atteint une valeur prédéterminée, et

compter un temps à partir d'un point de redémarrage du moteur après l'arrêt au ralenti à un point qui est déterminé lorsque la valeur équivalente atteint la valeur prédéterminée,

**caractérisé en ce que** si le temps (T) est supérieur à une valeur d'horloge prédéterminée (To), au prochain redémarrage du moteur après un arrêt en position de ralenti, retarder un temps d'explosion initial du moteur (10) selon un temps de retard prédéterminé.

5. Procédé de commande d'une transmission automatique selon la revendication 4, **caractérisé par** le comptage d'un temps d'arrêt au ralenti à partir de l'arrêt en position de ralenti au redémarrage du moteur, où le moyen de commande d'arrêt en position de ralenti stocke le temps d'arrêt au ralenti compté lorsqu'il est déterminé que la valeur équivalente n'atteint pas la valeur prédéterminée, et où lorsque le temps d'arrêt en position de ralenti devient égal à une valeur inférieure au temps d'arrêt au ralenti par une valeur de temps d'arrêt au ralenti prédéterminée après le prochain arrêt en position de ralenti, le moyen de commande d'arrêt en position de ralenti fournit un signal de fonctionnement du moteur à la ECU (50).

6. Procédé de commande d'une transmission automatique selon la revendication 4 ou 5, **caractérisé en ce que** l'étape de détermination comprend la détection d'une vitesse de rotation de turbine (Nt) comme une vitesse de rotation d'entrée de la transmission automatique (20) et le calcul d'une variation dans la vitesse de rotation détectée (Nt) de la turbine,

où lorsque la variation calculée est positive, il est déterminé que la valeur équivalente n'atteint pas la valeur prédéterminée tandis que lorsque la variation calculée est négative, il est déterminé que la valeur équivalente atteint la valeur prédéterminée.

# FIG.1

# FIG.2

# FIG.3

| RANGE | | R/C | H/C | L/C | D/C | L&R/B | 2-4/B | RD/B | L-OWC | RD-OWC |
|---|---|---|---|---|---|---|---|---|---|---|
| P | | | | | | | | ○ | | |
| R | | ○ | | | | ○ | | ○ | | |
| N | | | | | | | | ○ | | |
| D | 1st SPEED | | | ○ | | △ | | ○ | ○ | ○ |
| | 2nd SPEED | | | ○ | | | ○ | ○ | | ○ |
| | 3rd SPEED | | ○ | ○ | | | | ○ | | ○ |
| | 4th SPEED | | ○ | | | | ○ | ○ | | ○ |
| | 5th SPEED | | ○ | | ○ | | ○ | | | |

EP 1 348 895 B1

**FIG.4**

EP 1 348 895 B1

D/C  L/C  46  RD/B  2-4/B  H/C  L&R/B

d1  d2  d3  d4

41a  41

43a  43

42a  42

41b

PILOT
PRESSURE

42b

×

43b

PILOT
PRESSURE

45  40  40  42b
PILOT
PRESSURE

22  10

44  48  ENGINE

47  P_M

EP 1 348 895 B1

# FIG.5

Toil : OIL TEMPERATURE
PL/C : FORWARD-CLUTCH PRESSURE
Po : TARGET CLUTCH PRESSURE
T : AFTER ENGINE RESTART
DELT : TIME INCREMENT

START

S101 — IDLE-STOP SW ENERGIZED, ZERO VEHICLE SPEED, BRAKE SW TURNED ON, ZERO STEERING ANGLE & OTHER THAN R RANGE? — NO

YES

S102 — D RANGE? — NO

YES

S103 — Tlow < Toil < Thi — NO

YES

S104 — STOP ENGINE

S105 — BRAKE SW TURNED ON? — NO

YES

S106 — IDLE-STOP SW ENERGIZED? — NO

YES

TO END

S107 — TURN STARTER ON

S108 — D RANGE? — NO

YES

S109 — TURN BYPASS SOLENOID ON & T=0

S110 — TURN BYPASS SOLENOID OFF

S111 — READ Ne

S112 — Ne > No? — NO

YES

S118 — TURN STARTER OFF

S113 — TURN STARTER ON AT ROTATION RISE SPEED dNe/Dt=SO

S119 — BYPASS SOLENOID TURNED ON? — NO → 1

YES

S114 — BYPASS SOLENOID TURNED ON? — NO

YES

S120 — PL/C > Po? — NO

S121 — T=T+DELT

YES

S115 — PL/C > Po? — NO

S116 — T=T+DELT

YES

S122 — TURN BYPASS SOLENOID OFF

S117 — TURN BYPASS SOLENOID OFF

1

17

# FIG.6

To : PREDETERMINED TIME
TVO : ENGINE THROTTLE
       OPENING

( 1 )

S123 — $T > T_0$    NO

YES

S124 — $TVO > 0$    NO

YES

S125 — GIVEN-TIME ENGINE-TORQUE RESTRAINT CONTROL

( END )

# FIG.7

BRAKE SIGNAL

THROTTLE (TVO) SIGNAL

STARTER GENERATOR

WITH ENGINE-TORQUE RESTRAINT CONTROL

ENGINE INITIAL EXPLOSION

ENGINE RPM

FORWARD-CLUTCH PRESSURE

PREDETERMINED PRESSURE Po

LONGITUDINAL G

G WAVEFORM AFTER RESTRAINING ENGINE TORQUE

INITIAL G

PREDETERMINED TIME

TIME REQUIRED TO REACH PREDETERMINED PRESSURE

FIG.8

EP 1 348 895 B1

# FIG.9

EP 1 348 895 B1

# FIG.10

```
                    ( 1 )
                      │
                      ▼
S123 ─┐     ┌──────────────────┐   NO
      └─────│      T > To       ├──────┐
            └──────────────────┘       │
                   │ YES               │
                   ▼                   │
      NO  ┌──────────────────┐  S124   │
      ┌───│      TVO > 0      ├─┘       │
      │   └──────────────────┘         │
      │          │ YES                 │
      │  S201 ─┐ ▼                     │
      │   ┌────────────────────────┐   │
      │   │ ENGINE INITIAL EXPLOSION│  │
      │   │  TIMING DELAY CONTROL   │  │
      │   └────────────────────────┘   │
      │          │                     │
      └──────────►│                     │
                  ▼                     │
      S202 ─┐ ┌──────────────────┐     │
            └─│     To=To+ΔT      │     │
              └──────────────────┘     │
                   │                   │
                   ▼                   │
      NO  ┌──────────────────┐  S203   │
      ┌───│    To > Tomax     ├─┘       │
      │   └──────────────────┘         │
      │          │ YES                 │
      │          ▼          S204       │
      │   ┌──────────────────┐         │
      │   │     To=Tomax      ├─┘       │
      │   └──────────────────┘         │
      │          │                     │
      └──────────►│◄────────────────────┘
                  ▼
            ┌──────────┐
            │   END    │
            └──────────┘
```

$T > To$

$TVO > 0$

**ENGINE INITIAL EXPLOSION TIMING DELAY CONTROL**

$To = To + \Delta T$

$To > Tomax$

$To = Tomax$

EP 1 348 895 B1

# FIG.11

23

# FIG.12

```
              ( 1 )
               |
               v
S123 ┌─────────────────┐  NO
     <     T > To        >────────┐
     └─────────────────┘          │
               | YES              │
        NO     v         S124     │
     ┌──<   TVO > 0   >           │
     │  └─────────────┘           │
     │         | YES              │
S125 │         v                  │
     │  ╔═══════════════════════╗ │
     │  ║ GIVEN-TIME ENGINE-TORUQE║│
     │  ║ RESTRAINT CONTROL      ║ │
     │  ╚═══════════════════════╝ │
     │         │                  │
     └────────>│                  │
               v         S301     │
     ┌─────────────────────┐      │
     │ READ OIL TEMPERATURE │      │
     │      Toil0           │      │
     └─────────────────────┘      │
               │                  │
               v         S302     │
     ┌─────────────────┐          │
     │   Thi=Toil0      │          │
     └─────────────────┘          │
               │                  │
               v<─────────────────┘
          (  END  )
```

**FIG.13**

D/C   L/C

RD/B   2-4/B   H/C   L&R/B

d1   d2   d3   d4

41a   41

42a
42

43a   43

41b

PILOT
PRESSURE

42b

43b

PILOT
PRESSURE

45

40   40

42b

PILOT
PRESSURE

22   10

44

48

47   P_M

ENGINE

EP 1 348 895 B1

EP 1 348 895 B1

# FIG.14

Toil : OIL TEMPERATURE
PL/C : FORWARD-CLUTCH PRESSURE
Po : TARGET CLUTCH PRESSURE
T : AFTER ENGINE RESTART
DELT : TIME INCREMENT

START

S101 — IDLE-STOP SW ENERGIZED, ZERO VEHICLE SPEED, BRAKE SW TURNED ON, ZERO STEERING ANGLE & OTHER THAN R RANGE? — NO

YES

S102 — D RANGE? — NO

YES

S103 — Tlow < Toil < Thi — NO

YES

S104 — STOP ENGINE

S105 — BRAKE SW TURNED ON? — NO

YES

S106 — IDLE-STOP SW ENERGIZED? — NO

YES

TO END

S107 — TURN STARTER ON

S108 — D RANGE? — NO

YES

S109 — TURN BYPASS SOLENOID ON & T=0

S110 — TURN BYPASS SOLENOID OFF

S401 — READ Ne

S402 — Ne > No? — NO

YES

S406 — TURN STARTER OFF

S403 — TURN STARTER ON AT ROTATION RISE SPEED dNe/Dt=SO

S407 — BYPASS SOLENOID TURNED ON? — NO — (1)

YES

S404 — BYPASS SOLENOID TURNED ON? — NO

YES

S405 — T=T+DELT

S408 — READ TURBINE RPM Nt & COMPUTE ΔNt

S410 — T=T+DELT — NO — S409 — ΔNt < 0?

YES

S411 — TURN BYPASS SOLENOID OFF

(1)

26

EP 1 348 895 B1

# FIG.15

**BRAKE SW:** ON / OFF

**THROTTLE OPENING**

**STARTER GENERATOR**

INITIAL EXPLOSION BEFORE LEARNING

INITIAL EXPLOSION AFTER LEARNING

**ENGINE RPM AT $\Delta Ne < Po$**

Ne1 Ne2

**COMPLETE-EXPLOSION DETERMINATION**

No

TIME REQUIRED TO REACH $\Delta Ne < 0$ FROM INITIAL EXPLOSION AFTER LEARNING

**ENGINE RPM**

$\Delta T$

TIMER COUNT VALUE BEFORE LEARNING

TIME REQUIRED TO REACH $\Delta Ne < 0$ FROM INITIAL EXPLOSION BEFORE LEARNING

**CLUTCH PRESSURE P1 AT Ne1 BEFORE LEARNING**

TIMER COUNT VALUE AFTER LEARNING

**TURBINE RPM**

G AFTER LEARNING

**LONGITUDINAL G**

G BEFORE LEARNING

t3 t30

t2

t5

t1

t20 t40

27

# FIG.16

START

S101
IDLE-STOP SW ENERGIZED, ZERO VEHICLE SPEED, BRAKE SW TURNED ON, ZERO STEERING ANGLE & OTHER THAN R RANGE?

NO

YES

S102 D RANGE? NO

YES

S103 Tlow<Toil<Thi

NO

YES

S104 STOP ENGINE

S104a START COUNTING OF TIMER τ

S104b F=1? YES

NO

S105 BRAKE SW TURNED ON? NO

YES

S106 IDLE-STOP SW ENERGIZED?

NO

YES

S104c Ts=PREVIOUS τ−Δτ

S104d τ>Ts?

NO

YES

S104e FINISH COUNTING OF TIMER τ

TO END

S107 TURN STARTER ON

S108 D RANGE? NO

YES

S109 TURN BYPASS SOLENOID ON & T=0

S110 TURN BYPASS SOLENOID OFF

S111 READ Ne

S112 Ne>No? NO

YES

S118 TURN STARTER OFF

S113 TURN STARTER ON AT ROTATION RISE SPEED dNe/Dt=S0

S119 BYPASS SOLENOID TURNED ON? NO ①

S114 BYPASS SOLENOID TURNED ON? NO

YES

YES

S120 PL/C>Po? NO

T=T+DELT S121

S115 PL/C>Po? NO

T=T+DELT S116

YES

YES

S122 TURN BYPASS SOLENOID OFF

S117 TURN BYPASS SOLENOID OFF

①

Toil : OIL TEMPERATURE
PL/C : FORWARD-CLUTCH PRESSURE
Po : TARGET CLUTCH PRESSURE
T : AFTER ENGINE RESTART
DELT : TIME INCREMENT

# FIG.17

To : PREDETERMINED TIME
TVO : ENGINE THROTTLE
        OPENING

① 

S123 — T > To → NO

S123a — F=0

YES

S124 — TVO > 0 → NO

YES

S125 — GIVEN-TIME ENGINE-TORQUE RESTRAINT CONTROL

S125a — F=1

END

**EP 1 348 895 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1177932 A2

- US 6093974 A